# DEMANDE DE BREVET EUROPEEN

(11) **EP 4 847 380 A1**
(43) Date de publication de la demande: **02.12.2026**
(21) Numéro de dépôt: 26179153.7
(22) Date de dépôt: 18.05.2026
(51) Int. Cl.: B64C 13/16

(54) **PROCÉDÉ ET SYSTÈME DE RÉDUCTION DE CHARGES GÉNÉRÉES SUR UN AÉRONEF PAR UNE PERTURBATION DUE AU VENT**

(30) Priorité: 22.05.2025 FR 2505483
(71) Demandeur: Airbus SAS, 31700 Blagnac Cedex (FR); Airbus Operations SAS, 31060 Toulouse (FR)
(72) Inventeur: BLANC, Sébastien, 31700 BLAGNAC (FR); QUIROZ-HERNANDEZ, Esteban, 31700 BLAGNAC (FR); VERNAY, Robin, 31060 TOULOUSE (FR); FOURNIER, Hugo, 31700 BLAGNAC (FR)
(74) Mandataire: Gevers & Orès

(57) **Abrégé**

- Système de réduction de charges générées sur un aéronef par une perturbation due au vent.
- Le système comprend des calculateurs (31, 32) pour définir au moins une méthode d'estimation associée à au moins une loi d'allègement de charges parmi une méthode d'estimation du vent, et/ou une méthode d'estimation de l'accélération flexible de l'aéronef (AC), au moins une unité d'acquisition (33, 34, 35) pour acquérir une incidence totale ou une vitesse de vent totale et/ou une accélération totale ; les calculateurs (31, 32) étant configurés pour estimer la vitesse verticale du vent et/ou l'accélération flexible, pour déterminer au moins un ordre de commande dynamique à envoyer aux actionneurs (9) pour engendrer un braquage des gouvernes extérieures (3) des actionneurs (9) afin de réduire un moment de flexion dans une bande de fréquence d'un premier mode de flexion de la voilure.

## Description

### Domaine technique

La présente invention concerne un procédé et un système de réduction de charges générées sur un aéronef par une perturbation due au vent.

### État de la technique

On sait que, dans le cadre d'une certification charge des aéronefs, tels que des avions de transport, il faut considérer plusieurs cas de dimensionnement réglementaires liés respectivement :
- à une manœuvre ;
- à une rafale discrète (« discrete gust » en anglais) ; et
- une turbulence continue (« continuous turbulence » en anglais).

Les deux derniers cas de charges sont parfois plus dimensionnants que les cas de charges liés à une manœuvre. Il serait donc avantageux de pouvoir réduire les niveaux de charge associés à une rafale discrète et à une turbulence continue, ce qui permettrait notamment de réaliser un gain sur la masse structurale de la voilure d'aéronef.

Au-delà des problématiques des charges structurelles (pour le dimensionnement de la structure et la certification de l'aéronef), il existe d'autres problématiques liés aux rafales et turbulences, notamment :
- la sécurité des occupants de la cabine (risque de blessure grave lors des turbulences par la projection d'objets et personnes dans la cabine) ;
- le confort des passagers et du pilote en turbulence.

Pour les aéronefs équipés de systèmes de commandes de vol électriques (EFCS pour « Electrical Flight Control System » en anglais), il est possible d'utiliser les gouvernes (autrement appelées « surfaces de contrôle ») et les capteurs de l'aéronef pour réduire ou atténuer les problèmes décrits précédemment. Cependant, la mise en œuvre de ces interventions présente certaines difficultés et risques telles que :
- garantir des marges de flottement adéquates dans des fonctionnement à boucle fermée avec un système EFCS,
- ne pas dégrader les charges qui peuvent être dimensionnantes, le confort, et/ou la sécurité cabine lorsque les rafales et les turbulences changent rapidement.

Différentes stratégies de lois dans le système EFCS de l'état de l'art abordent les problématiques et risques de manières différentes. Les choix étant déterminés en partie par les caractéristiques des composants du système EFCS, par exemple :
- type, nombre, localisation et performances des capteurs,
- rapidité et capacité des calculateurs,
- type, nombre, taille, et performances des gouvernes.

Il existe actuellement des procédés et des systèmes pour réduire les charges exercées sur un élément de structure d'un aéronef, tel qu'une aile de voilure. Les charges exercées peuvent avoir pour origine des rafales ou de la turbulence. Il existe des procédés permettant de réduire les charges tout en garantissant des marges de flottement adéquates dans des fonctionnement à boucle fermée avec un système EFCS.

Le document FR 2 912 991 B1 décrit un procédé de réduction de charges engendrées par des rafales et de la turbulence. Les rafales ou la turbulence sont détectées par la mesure de l'angle d'incidence au nez de l'aéronef. Le braquage (ou déflection) d'une gouverne est alors commandé pour effectuer une réduction passive de la charge, ce qui veut dire que le braquage reste constant quand la perturbation a été détectée une fois. Ainsi, cela permet d'éviter un couplage aéroélastique.

Toutefois, cette stratégie de réduction passive de charge est limitée dans ses performances quand la perturbation, telle que des rafales ou de la turbulence, change rapidement et peut aussi mener à des charges plus importantes dans certaines situations particulières.

### Exposé de l'invention

La présente invention a pour objet de proposer un procédé et un système de pallier les inconvénients de l'art antérieur.

Pour cela, elle concerne un procédé de réduction de charges générées sur un aéronef par une perturbation due au vent, l'aéronef présentant une voilure comportant des gouvernes extérieures susceptibles d'être actionnées par des premiers actionneurs.

Selon l'invention, le procédé comprend au moins les étapes suivantes mises en œuvre de façon automatique et répétitive :
- une première étape de définition, mise en œuvre par au moins un calculateur, pour définir, en fonction d'un premier ensemble de conditions prédéterminées, au moins une méthode d'estimation à mettre en œuvre associée à au moins une loi d'allègement de charges à mettre en œuvre parmi :
   o une méthode d'estimation du vent à partir de mesures au moins d'un capteur d'incidence ou au moins d'un capteur de vitesse agencé au nez de l'aéronef, et/ou
   o une méthode d'estimation de l'accélération flexible de l'aéronef à partir de mesures au moins d'un accéléromètre embarqué sur l'aéronef en au moins un point de mesure sur la voilure, l'accélération flexible correspondant à une composante flexible de l'accélération de l'aéronef ;
- une étape d'acquisition, mise en œuvre par au moins une unité d'acquisition, pour acquérir :
   o une incidence totale mesurée par le ou les capteurs d'incidence ou une vitesse de vent totale par le ou les capteurs de vitesse, si la méthode d'estimation du vent est définie et/ou,
   o une accélération totale mesurée par le ou les accéléromètres, si la méthode d'estimation de l'accélération flexible est définie ;
- une étape d'estimation, mise en œuvre par le ou les calculateurs, pour estimer :
   o la vitesse verticale du vent à partir de l'incidence totale ou à partir de la vitesse de vent totale si la méthode d'estimation du vent est définie et/ou,
   o l'accélération flexible, si la méthode d'estimation de l'accélération flexible est définie ;
- une étape de détermination, mise en œuvre par le ou les calculateurs, déterminer au moins un premier ordre de commande dynamique destiné à être envoyé aux premiers actionneurs, le ou les premiers ordres de commande étant destinés à engendrer un braquage des gouvernes extérieures desdits premiers actionneurs permettant de réduire un moment de flexion dans une bande de fréquence d'un premier mode de flexion de la voilure, le ou les premiers ordres de commande étant déterminés, d'une part, à partir de la ou des lois d'allègement de charges associées à la ou les méthodes d'estimation définies, et d'autre part, de la vitesse verticale de vent et/ou de l'accélération flexible ;
- une première étape de transmission, mise en œuvre par au moins une première unité de transmission, pour transmettre le ou les premiers ordres de commande aux premiers actionneurs des gouvernes extérieures ;
- une première étape de commande, mise en œuvre par les premiers actionneurs, pour commander les gouvernes extérieures à partir du ou des premiers ordres de commande transmis dans la première étape de transmission.

Ainsi, grâce au procédé, en utilisant des gouvernes extérieures situées sur la partie extérieure des ailes de la voilure, il est possible de contrôler de manière dynamique la distribution de portance sur l'aile pour réduire le moment de flexion généré par des vents verticaux. Contrairement aux techniques d'allègement de charges basées sur le contrôle statique du centre de poussée.

De plus, le procédé comprend une étape d'activation, mise en œuvre par le ou les calculateurs, pour mettre en œuvre l'étape de détermination, si un deuxième ensemble de conditions prédéterminées sont remplies, le deuxième ensemble de conditions prédéterminées comportant au moins une condition pour éviter un risque de dépassement des charges limites de l'aéronef.

Par ailleurs, si la méthode d'estimation du vent est définie, l'étape d'acquisition est précédée d'une étape de choix, mise en œuvre par le ou les calculateurs, pour choisir quelle mesure entre l'incidence totale et la vitesse de vent totale est utilisée pour estimer la vitesse verticale du vent dans l'étape d'estimation, la mesure étant choisie en fonction d'un troisième ensemble de conditions prédéterminées, le troisième ensemble de conditions prédéterminées comportant au moins une condition permettant d'assurer une qualité minimale requise des mesures.

En outre, le procédé comprend :
- une étape de calcul, mise en œuvre par le ou les calculateurs, pour calculer au moins un deuxième ordre de commande destiné à être envoyé à des deuxièmes actionneurs susceptibles d'actionner des gouvernes de profondeur, le ou les deuxièmes ordres de commande étant configurés pour compenser un moment de tangage engendré par le braquage des gouvernes extérieures de la voilure actionnées par le ou les premiers ordres de commande déterminés dans l'étape de détermination,
- une deuxième étape de transmission, par une deuxième unité de transmission, pour transmettre aux deuxièmes actionneurs le ou les deuxièmes ordres de commande,
- une deuxième étape de commande, mise en œuvre par les deuxièmes actionneurs, pour commander les gouvernes de profondeur à partir du ou des deuxièmes ordres de commande transmis dans la deuxième étape de transmission.

De plus, l'étape d'estimation comprend :
au moins les sous-étapes suivantes si la méthode d'estimation du vent est définie :
   - une première sous-étape d'acquisition, mise en œuvre par une sous-unité d'acquisition, pour acquérir une contribution attribuable à des mouvements rigides de l'aéronef mesurée par une centrale inertielle, la contribution correspondant à une incidence sol au centre de gravité de l'aéronef, si une incidence totale est mesurée par le ou les capteurs d'incidence,
   - une première sous-étape de calcul, mise en œuvre par le ou les calculateurs, pour calculer la vitesse verticale du vent à partir de l'incidence totale et de ladite contribution ou à partir de la vitesse de vent totale ;
et/ou au moins les sous-étapes suivantes si la méthode d'estimation de l'accélération flexible de l'aéronef est définie :
   - une deuxième sous-étape d'acquisition, mise en œuvre par la sous-unité d'acquisition, pour acquérir une accélération rigide au centre de gravité de l'aéronef mesurée par la centrale inertielle et transmettre ladite accélération rigide au centre de gravité de l'aéronef mesurée au ou aux calculateurs,
   - une deuxième sous-étape de calcul, mise en œuvre par le ou les calculateurs, pour estimer l'accélération flexible de l'aéronef à partir de l'accélération totale et de l'accélération rigide transportée au ou aux points de mesure de l'accélération totale, l'accélération rigide étant transportée au ou aux points de mesure à l'aide d'équations de corps rigide prédéterminées.

Par ailleurs, si la méthode d'estimation du vent est définie, la première sous-étape de calcul est suivie d'une première sous-étape de filtrage, mise en œuvre par le ou les calculateurs, pour filtrer la vitesse verticale du vent estimée ; si la méthode d'estimation de l'accélération flexible de l'aéronef est définie, la deuxième sous-étape de calcul étant suivie d'une deuxième sous-étape de filtrage, mise en œuvre par le ou les calculateurs, pour filtrer l'accélération flexible à l'aide d'un filtre passe-haut présentant une fréquence de coupure supérieure ou égale à des modes rigides longitudinaux et inférieure ou égale au premier mode de flexion de la voilure.

Selon une autre particularité, le deuxième ensemble de conditions prédéterminées comprend au moins un seuil d'angle d'incidence défini à partir de la vitesse du vent et/ou un seuil d'accélération, ces seuils étant représentatifs d'un seuil de braquage prédéterminé, les conditions du deuxième ensemble de conditions prédéterminées ne sont pas remplies si le ou les ordres de commande engendrent un braquage des gouvernes extérieures inférieur ou égal à un seuil de braquage prédéterminé.

L'invention concerne également un système de réduction de charges générées sur un aéronef par une perturbation due au vent, l'aéronef présentant une voilure comportant des gouvernes extérieures susceptibles d'être actionnés par des premiers actionneurs.

Selon l'invention, le système comprend :
- au moins un calculateur configuré pour définir, en fonction d'un premier ensemble de conditions prédéterminées, au moins une méthode d'estimation à mettre en œuvre associée à au moins une loi d'allègement de charges à mettre en œuvre parmi :
   o une méthode d'estimation du vent, et/ou
   o une méthode d'estimation de l'accélération flexible de l'aéronef, l'accélération flexible correspondant à une composante flexible de l'accélération de l'aéronef ;
- au moins une unité d'acquisition configurée pour acquérir une incidence totale mesurée par au moins un capteur d'incidence agencé au nez de l'aéronef ou une vitesse de vent totale mesurée par au moins un capteur de vitesse agencé au nez de l'aéronef et/ou une accélération totale mesurée par au moins un accéléromètre embarqué sur l'aéronef en au moins un point de mesure sur la voilure ;

le ou les calculateurs étant en outre configurés pour :
   - estimer :
      o la vitesse verticale du vent à partir de l'incidence totale ou à partir de la vitesse de vent totale si la méthode d'estimation du vent est définie et/ou,
      o l'accélération flexible, si la méthode d'estimation de l'accélération flexible est définie ;
   - déterminer au moins un premier ordre de commande dynamique destiné à être envoyé aux premiers actionneurs, le ou les premiers ordres de commande étant destinés à engendrer un braquage des gouvernes extérieures desdits premiers actionneurs permettant de réduire un moment de flexion dans une bande de fréquence d'un premier mode de flexion de la voilure, le ou les premiers ordres de commande étant déterminés, d'une part, à partir de la ou des lois d'allègement de charges associées à la ou les méthodes d'estimation définies, et d'autre part, de la vitesse verticale de vent et/ou de l'accélération flexible ;
le système comprenant en outre au moins une première unité de transmission configurée pour transmettre le ou les ordres de commande aux premiers actionneurs des gouvernes extérieures pour commander les gouvernes extérieures.

L'invention concerne également un aéronef, en particulier un avion de transport, qui comporte un système de réduction de charges générées sur un aéronef par une perturbation due au vent tel que celui décrit ci-dessus.

### Brève description des figures

Les figures annexées feront bien comprendre comment l'invention peut être réalisée. Sur ces figures, des références identiques désignent des éléments semblables.
La figure 1 représente schématiquement le système de réduction de charges générées sur un aéronef par une perturbation due au vent.

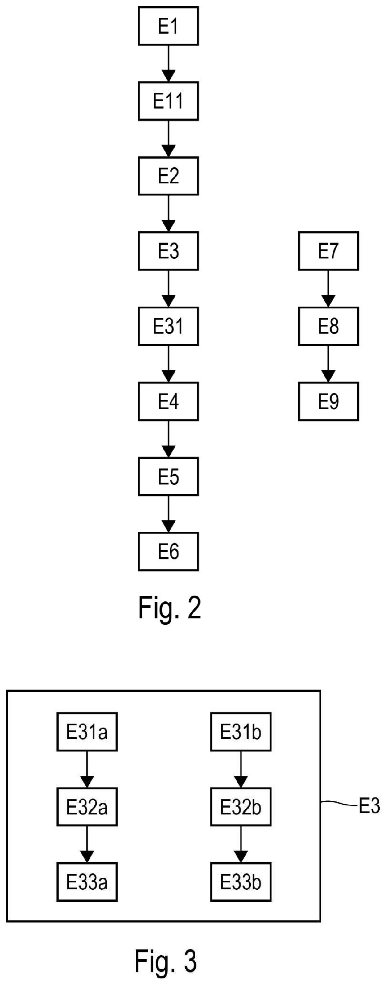

La figure 2 représente schématiquement le procédé de réduction de charges générées sur un aéronef par une perturbation due au vent.
La figure 3 représente schématiquement l'étape d'estimation du procédé.
La figure 4 représente une vue de dessus d'un aéronef équipé de capteurs d'incidence, d'un capteur de vitesse et d'accéléromètres ainsi que de calculateurs.
La figure 5 représente une vue de face d'un aéronef et de deux distributions de portance sur la voilure de l'aéronef.

### Description détaillée

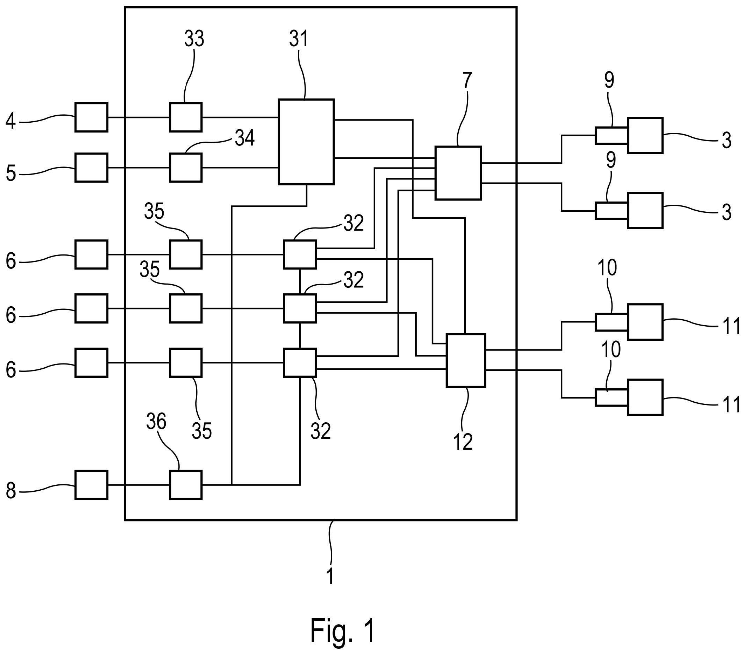

Le système 1 de réduction de charges générées sur un aéronef AC par une perturbation due au vent est représenté schématiquement sur la figure 1. Dans la suite de la description, le dit système est appelé « système 1 ».

Dans la description, la conjonction de coordination « ou » correspond à un « ou exclusif ». La combinaison de conjonction de coordination « et/ou » correspond à un « ou inclusif ».

L'aéronef AC présentant une voilure 2 comportant des gouvernes extérieures 3 susceptibles d'être actionnés par des actionneurs 9, dits premiers actionneurs 9.

Les gouvernes extérieures 3 correspondent à des gouvernes proches de l'extrémité des ailes de la voilure 2. Les gouvernes extérieures 3 peuvent correspondre à des ailerons extérieurs. Les gouvernes extérieures 3 sont des gouvernes externes par rapport au centre de poussée aérodynamique de l'aéronef AC.

Le système 1 comprend au moins un calculateur 31, 32 et au moins une unité d'acquisition 33, 34, 35.

La ou les unités d'acquisition 33, 34, 35 sont configurées pour acquérir, d'une part, une incidence totale mesurée par au moins un capteur d'incidence 4 agencé au nez de l'aéronef AC ou une vitesse de vent totale mesurée par au moins un capteur de vitesse 5 agencé au nez de l'aéronef AC et/ou, d'autre part, une accélération totale mesurée par au moins un accéléromètre 6 embarqué sur l'aéronef AC en au moins un point de mesure sur la voilure 2. L'incidence totale de l'aéronef AC (ou l'angle d'attaque total) correspond à l'angle que forme une direction longitudinale de l'aéronef AC avec le vent relatif.

Le ou les capteurs de vitesse peut correspondre à un dispositif de détection et télémétrie par la lumière, autrement appelé LiDAR (pour « Light detection and ranging » en anglais). Ce dispositif permet de mesurer des distances et des mouvements précis en temps réel et donc il permet de mesurer la vitesse du vent totale.

La ou les unités d'acquisition 33, 34, 35 peuvent être comprises par le ou les calculateurs 31, 32.

Le ou les calculateur 31, 32 sont configurés pour définir, en fonction d'un premier ensemble de conditions prédéterminées, au moins une méthode d'estimation à mettre en œuvre associée à au moins une loi d'allègement de charges à mettre en œuvre. Le terme « définir » signifie « choisir pour être mis en œuvre ».

La ou les méthodes d'estimation à mettre en œuvre sont définies parmi une méthode d'estimation du vent et/ou une méthode d'estimation de l'accélération flexible de l'aéronef AC. L'accélération flexible correspond à une composante flexible de l'accélération de l'aéronef AC.

Le premier ensemble de conditions prédéterminées peut comprendre au moins une condition représentative des circonstances de mesures telles que des conditions atmosphériques, etc.

Le premier ensemble de conditions prédéterminées peut également comprendre des conditions de disponibilités de capteurs de non-défaillance. Si un capteur nécessaire pour définir une méthode d'estimation n'est pas disponible ou est défaillant, ladite méthode d'estimation n'est pas définie.

Le ou les calculateurs 31, 32 sont en outre configurés, d'une part, pour estimer la vitesse verticale du vent à partir de l'incidence totale ou à partir de la vitesse de vent totale si la méthode d'estimation du vent est définie, et/ou, d'autre part, pour estimer l'accélération flexible, si la méthode d'estimation de l'accélération flexible est définie.

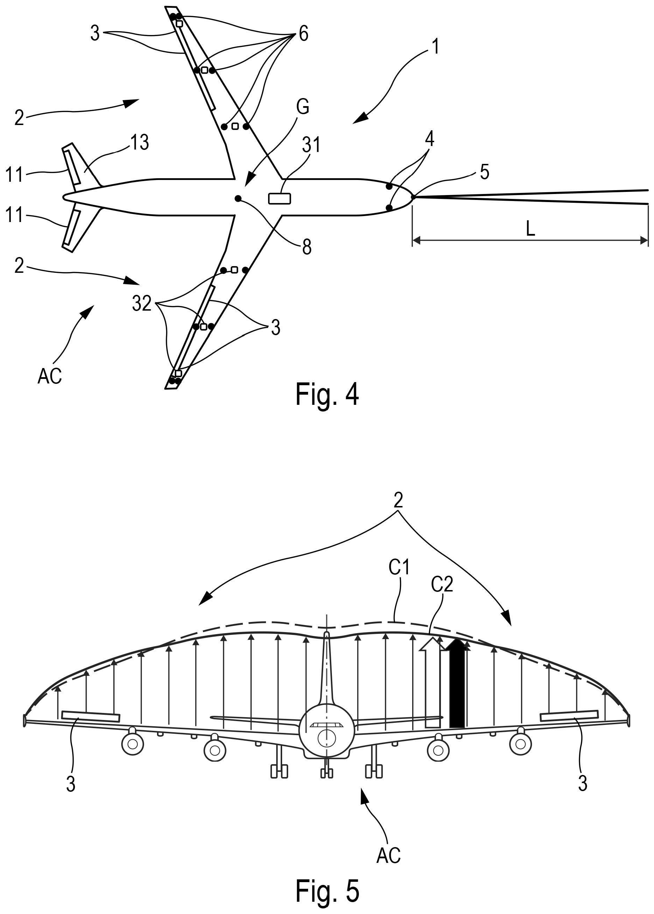

De façon avantageuse, comme représenté sur la figure 4, le ou les calculateurs 31, 32 peuvent comprendre un calculateur 31 central destiné à estimer la vitesse verticale du vent et au moins un calculateur 32 distribué destiné à estimer l'accélération totale disposé au plus proche du ou des accéléromètres 6. Sur l'exemple de la figure 4, l'aéronef AC comprend deux fois trois paires d'accéléromètres disposées régulièrement sur chacune des ailes de la voilure 2. Dans cette figure 4, un calculateur 32 est disposé entre deux accéléromètres 6 d'une paire. Ainsi, une mesure de l'accéléromètre 6 peut être transmise sans retard au calculateur 32 par l'intermédiaire de l'unité d'acquisition 35. Bien entendu, le calculateur 31 central peut être destiné à estimer la vitesse verticale du vent, ainsi qu'à estimer l'accélération totale (dans le cas d'une architecture centralisée pour les calculateurs 31, 32).

Le ou les calculateurs sont également configurés pour déterminer au moins un premier ordre de commande dynamique destiné à être envoyé aux premiers actionneurs 9. Le ou les premiers ordres de commande sont destinés à engendrer un braquage (autrement appelé déflection) des gouvernes extérieures 3 desdits premiers actionneurs 9 permettant de réduire un moment de flexion dans une bande de fréquence d'un premier mode de flexion de la voilure 2. Une bande de fréquence d'un premier mode de flexion de la voilure 2 est définie comme étant comprise entre 0 Hz et une fréquence prédéterminée permettant de contrôler le premier mode de flexion de la voilure 2. Le ou les premiers ordres de commande sont déterminés, d'une part, à partir de la ou des lois d'allègement de charges associées à la ou les méthodes d'estimation définies, et d'autre part, de la vitesse verticale de vent et/ou de l'accélération flexible.

Le ou les premiers ordres de commande peuvent être égaux à un gain prédéterminé multiplié par la vitesse de vent vertical estimé.

Le système comprend en outre au moins une première unité de transmission 7 configurée pour transmettre le ou les premiers ordres de commande aux premiers actionneurs 9 des gouvernes extérieures 3 pour commander les gouvernes extérieures 3.

Le ou les calculateurs 31, 32 peuvent avantageusement être configurés pour déterminer au moins un premier ordre de commande dynamique destiné à être envoyé aux actionneurs 9, à condition qu'un deuxième ensemble de conditions prédéterminées soit rempli. Le deuxième ensemble de conditions prédéterminées comporte au moins une condition pour éviter un risque de dépassement des charges limites de l'aéronef AC.

Le deuxième ensemble de conditions prédéterminées peut comprendre au moins un seuil d'angle d'incidence défini à partir de la vitesse du vent et/ou un seuil d'accélération, ces seuils étant représentatifs d'un seuil de braquage prédéterminé. Par exemple, les conditions du deuxième ensemble de conditions prédéterminées ne sont pas remplies si le ou les ordres de commande déterminés engendrent un braquage des gouvernes extérieures 3 inférieur ou égal à un seuil de braquage prédéterminé. Cela permet de minimiser les petits ordres de commande qui pourraient dégrader la performance aérodynamique (consommation de fuel) ; ou de minimiser les petits ordres de commande qui pourraient avoir une incidence sur le confort ou la trajectoire de l'aéronef AC sans bénéfice ; ou de minimiser la fatigue des premiers actionneurs 9.

Le deuxième ensemble de conditions prédéterminées peut aussi comprendre au moins un seuil d'angle d'incidence total mesuré. Par exemple, les conditions du deuxième ensemble de conditions prédéterminées ne sont pas remplies si l'angle d'incidence total mesuré est inférieur ou égal à un seuil prédéterminé d'angle d'incidence. Cela permet de minimiser la fatigue des premiers actionneurs 9 en évitant des ordres de commande trop petits et trop fréquents.

Si la méthode d'estimation du vent est définie, le ou les calculateurs 31, 32 peuvent être aussi configurés pour choisir une mesure entre l'incidence totale et la vitesse de vent totale à utiliser pour estimer la vitesse verticale du vent. La mesure est choisie en fonction d'un troisième ensemble de conditions prédéterminées. Le troisième ensemble de conditions prédéterminées peut comporter au moins une condition permettant d'assurer une qualité minimale requise des mesures par le capteur d'incidence 4 et le capteur de vitesse 5.

Par exemple, la qualité minimale requise des mesures des capteurs d'incidence 4 et de vitesse 5 peut dépendre de la bande passante des capteurs 4, 5, du bruit, du temps de traitement du signal par les capteurs 4, 5, etc.

Dans le cas où le capteur de vitesse 5 est un LiDAR, le choix peut aussi dépendre de la distance L des points focaux du LiDAR. Les points focaux doivent donner suffisamment d'avance pour comparer favorablement avec les capteurs d'incidence 4. De façon non limitative, la distance L typique est comprise entre 100 m et 200 m devant le nez de l'aéronef AC.

Par ailleurs, le ou les calculateurs peuvent être configurés pour calculer au moins un deuxième ordre de commande destiné à être envoyé à des actionneurs 10, dits deuxièmes actionneurs 10, susceptibles d'actionner des gouvernes de profondeur 11.

Les gouvernes de profondeur 11 sont disposées au niveau de l'empennage horizontal 13 de l'aéronef AC (figure 4).

Le ou les deuxièmes ordres de commande sont configurés pour compenser un moment de tangage engendré par le braquage des gouvernes extérieures 3 de la voilure 2 actionnées par les premiers actionneurs 9 commandés par le ou les premiers ordres de commande déterminés.

Le système 1 peut ainsi comprendre une deuxième unité de transmission 12 configurée pour transmettre aux deuxièmes actionneurs 10 le ou les deuxièmes ordres de commande. Les gouvernes de profondeur 11 sont ainsi braquées à partir du ou des deuxièmes ordres de commande transmis aux deuxièmes actionneurs 10 par la deuxième unité de transmission 12.

Si la méthode d'estimation du vent est définie, le système 1 peut comprendre une première sous-unité d'acquisition 36 configurée pour acquérir une contribution attribuable à des mouvements rigides de l'aéronef AC mesurée par une centrale inertielle 8. Ladite contribution correspond à une incidence sol au centre de gravité de l'aéronef AC. L'incidence sol au centre de gravité de l'aéronef AC est ramenée à la position de la sonde d'incidence « totale ». Ainsi, le ou les calculateurs 31, 32 peuvent être configurés pour calculer la vitesse verticale du vent, d'une part, à partir de l'incidence totale mesurée par le ou les capteurs d'incidence 4 et de ladite contribution dans le cas où une incidence totale est mesurée par le ou les capteurs d'incidence 4 ou, d'autre part, à partir de la vitesse de vent totale mesuré par le ou les capteurs de vitesse 5 dans le cas où une vitesse de vent totale est mesurée par le ou les capteurs de vitesse 5.

Si la méthode d'estimation de l'accélération flexible de l'aéronef AC est définie, la sous-unité d'acquisition 36 est configurée pour acquérir une accélération rigide au centre de gravité G de l'aéronef AC mesurée par la centrale inertielle 8 et transmettre ladite accélération rigide au centre de gravité G de l'aéronef AC mesurée au ou aux calculateurs 31, 32. Ainsi, le ou les calculateurs 31, 32 sont configurés pour estimer l'accélération flexible de l'aéronef AC à partir de l'accélération totale et de l'accélération rigide transportée au ou aux points de mesure de l'accélération totale. L'accélération rigide est transportée au ou aux points de mesure à l'aide d'équations de corps rigide prédéterminées. L'accélération flexible est donc égale à la différence entre l'accélération totale mesurée et l'accélération rigide.

Si la méthode d'estimation du vent est définie, le ou les calculateurs 31, 32 peuvent être configurés pour filtrer la vitesse verticale du vent estimée. Le filtre est choisi pour minimiser les charges de flexion de la voilure 2 induites par la turbulence. Le ou les ordres de commande transmis aux actionneurs 9 peuvent ainsi correspondre à un gain multiplié par la vitesse de vent verticale estimée et filtrée. Le filtre peut être égal à un rapport entre, d'une part, un angle d'incidence total dû au vent en absence de commande sur les gouvernes extérieures 3 et, d'autre part, un angle d'incidence défini uniquement à partir de la vitesse du vent par rapport au système de coordonnées de l'aéronef AC à un instant donné, sans prendre en compte les mouvements de l'aéronef AC.

Ce filtre est mis à jour de façon continue par le ou les calculateurs 31, 32 selon le point de vol, à savoir selon l'altitude de l'aéronef, la masse de l'aéronef AC, le centrage de l'aéronef AC, etc.

Si la méthode d'estimation de l'accélération flexible de l'aéronef AC est définie, le ou les calculateurs 31, 32 peuvent être configurés pour filtrer l'accélération flexible à l'aide d'un filtre passe-haut présentant une fréquence de coupure supérieure ou égale à des modes rigides longitudinaux et inférieure ou égale au premier mode de flexion de la voilure 2.

L'invention concerne également un procédé de réduction de charges générées sur un aéronef AC par une perturbation due au vent.

Le procédé comprend au moins les étapes suivantes mises en œuvre de façon automatique et répétitive :
- une première étape E1 de définition, mise en œuvre par le ou les calculateurs 31, 32, pour définir, en fonction d'un premier ensemble de conditions prédéterminées, au moins une méthode d'estimation à mettre en œuvre associée à au moins une loi d'allègement de charges à mettre en œuvre parmi :
   o une méthode d'estimation du vent à partir de mesures au moins d'un capteur d'incidence 4 ou au moins d'un capteur de vitesse 5 agencé au nez de l'aéronef AC, et/ou
   o une méthode d'estimation de l'accélération flexible de l'aéronef AC à partir de mesures au moins d'un accéléromètre 6 embarqué sur l'aéronef AC en au moins un point de mesure sur la voilure 2, l'accélération flexible correspondant à une composante flexible de l'accélération de l'aéronef AC ;
- une étape E2 d'acquisition, mise en œuvre par la ou les unités d'acquisition 33, 34, 35, pour acquérir :
   o une incidence totale mesurée par le ou les capteurs d'incidence 4 ou une vitesse de vent totale par le ou les capteurs de vitesse 5, si la méthode d'estimation du vent est définie et/ou,
   o une accélération totale mesurée par le ou les accéléromètres 6, si la méthode d'estimation de l'accélération flexible est définie ;
- une étape E3 d'estimation, mise en œuvre par le ou les calculateurs 31, 32, pour estimer :
   o la vitesse verticale du vent à partir de l'incidence totale ou à partir de la vitesse de vent totale si la méthode d'estimation du vent est définie et/ou,
   o l'accélération flexible, si la méthode d'estimation de l'accélération flexible est définie ;
- une étape E4 de détermination, mise en œuvre par le ou les calculateurs 31, 32, déterminer au moins un premier ordre de commande dynamique destiné à être envoyé aux premiers actionneurs 9, le ou les premiers ordres de commande étant destinés à engendrer un braquage des gouvernes extérieures 3 desdits premiers actionneurs 9 permettant de réduire un moment de flexion dans une bande de fréquence d'un premier mode de flexion de la voilure 2, le ou les premiers ordres de commande étant déterminés, d'une part, à partir de la ou des lois d'allègement de charges associées à la ou les méthodes d'estimation définies, et d'autre part, de la vitesse verticale de vent et/ou de l'accélération flexible ;
- une première étape E5 de transmission, mise en œuvre par le ou les premières unités de transmission 7, pour transmettre le ou les premiers ordres de commande aux premiers actionneurs 9 des gouvernes extérieures 3 ;
- une première étape E6 de commande, mise en œuvre par les premiers actionneurs 9, pour commander les gouvernes extérieures 3 à partir du ou des premiers ordres de commande transmis dans la première étape E5 de transmission.

Le procédé peut comprendre une étape E31 d'activation, mise en œuvre par le ou les calculateurs 31, 32, pour mettre en œuvre l'étape E4 de détermination, si un deuxième ensemble de conditions prédéterminées sont remplies, le deuxième ensemble de conditions prédéterminées comportant au moins une condition pour éviter un risque de dépassement des charges limites de l'aéronef AC.

Si la méthode d'estimation du vent est définie, l'étape E2 d'acquisition peut être précédée d'une étape E11 de choix, mise en œuvre par le ou les calculateurs 31, 32, pour choisir quelle mesure entre l'incidence totale et la vitesse de vent totale est utilisée pour estimer la vitesse verticale du vent dans l'étape E3 d'estimation, la mesure étant choisie en fonction d'un troisième ensemble de conditions prédéterminées, le troisième ensemble de conditions prédéterminées comportant au moins une condition permettant d'assurer une qualité minimale requise des mesures.

Le procédé peut comprendre en outre :
- une étape E7 de calcul, mise en œuvre par le ou les calculateurs 31, 32, pour calculer au moins un deuxième ordre de commande destiné à être envoyé aux deuxièmes actionneurs 10 susceptibles d'actionner des gouvernes de profondeur 11, le ou les deuxièmes ordres de commande étant configurés pour compenser un moment de tangage engendré par le braquage des gouvernes extérieures 3 de la voilure 2 actionnées par le ou les premiers ordres de commande déterminés dans l'étape E4 de détermination,
- une deuxième étape E8 de transmission, par la deuxième unité de transmission 12, pour transmettre aux deuxièmes actionneurs 10 le ou les deuxièmes ordres de commande,
- une deuxième étape E9 de commande, mise en œuvre par les deuxièmes actionneurs 10, pour commander les gouvernes de profondeur 11 à partir du ou des deuxièmes ordres de commande transmis dans la deuxième étape E8 de transmission.

L'étape E3 d'estimation peut comprendre :
d'une part, au moins les sous-étapes suivantes si la méthode d'estimation du vent est définie :
   - une première sous-étape E31a d'acquisition, mise en œuvre par une sous-unité d'acquisition 36, pour acquérir une contribution attribuable à des mouvements rigides de l'aéronef AC mesurée par une centrale inertielle (8), la contribution correspondant à une incidence sol au centre de gravité de l'aéronef AC, si une incidence totale est mesurée par le ou les capteurs d'incidence 4,
   - une première sous-étape E32a de calcul, mise en œuvre par le ou les calculateurs 31, 32, pour calculer la vitesse verticale du vent à partir de l'incidence totale et de ladite contribution ou à partir de la vitesse de vent totale ;
et/ou, d'autre part au moins les sous-étapes suivantes si la méthode d'estimation de l'accélération flexible de l'aéronef AC est définie :
   - une deuxième sous-étape E31b d'acquisition, mise en œuvre par la sous-unité d'acquisition 36, pour acquérir une accélération rigide au centre de gravité G de l'aéronef AC mesurée par la centrale inertielle 8, ladite accélération rigide au centre de gravité G de l'aéronef AC étant transmise au ou aux calculateurs 31, 32,
   - une deuxième sous-étape E32b de calcul, mise en œuvre par le ou les calculateurs 31, 32, pour estimer l'accélération flexible de l'aéronef AC à partir de l'accélération totale et de l'accélération rigide transportée au ou aux points de mesure de l'accélération totale, l'accélération rigide étant transportée au ou aux points de mesure à l'aide d'équations de corps rigide prédéterminées.

Si la méthode d'estimation du vent est définie, la première sous-étape E32a de calcul peut être suivie d'une première sous-étape E33a de filtrage, mise en œuvre par le ou les calculateurs 31, 32, pour filtrer la vitesse verticale du vent estimée.

Si la méthode d'estimation de l'accélération flexible de l'aéronef AC est définie, la deuxième sous-étape E32b de calcul peut être suivie d'une deuxième sous-étape E33b de filtrage, mise en œuvre par le ou les calculateurs 31, 32, pour filtrer l'accélération flexible à l'aide d'un filtre passe-haut présentant une fréquence de coupure supérieure ou égale à des modes rigides longitudinaux et inférieure ou égale au premier mode de flexion de la voilure 2.

Le deuxième ensemble de conditions prédéterminées peut comprendre au moins un seuil de braquage prédéterminé. Les conditions du deuxième ensemble de conditions prédéterminées ne sont pas remplies si le ou les ordres de commande engendrent un braquage des gouvernes extérieures 3 inférieur ou égal à un seuil de braquage prédéterminé.

Le procédé utilise le principe de centre de poussée dynamique. Le procédé concerne uniquement les turbulences et les rafales verticales. En utilisant les gouvernes extérieures 3 situées sur la partie extérieure des ailes de la voilure 2, il est possible de contrôler de manière dynamique la distribution de portance sur l'aile pour réduire le moment de flexion généré par des vents verticaux. Contrairement aux techniques d'allègement de charges basées sur le contrôle statique du centre de poussée, le procédé utilise des données dynamiques qui caractérisent en temps réel l'évolution du vent vertical, et calcule un ordre envoyé aux gouvernes extérieures 3 pour atténuer le moment de flexion.

La figure 5 illustre cette atténuation du moment de flexion sur la voilure 2. Les courbes C1 et C2 indiquent la distribution de la portance sur la voilure 2. La courbe C1 en ligne interrompue montre la distribution de la portance sans la mise en œuvre du procédé. La courbe C2 en ligne continue montre la distribution de la portance avec la mise en œuvre du procédé. Le procédé permet donc une redistribution de la portance sur la voilure 2.

L'utilisation de gouvernes extérieures 3 situées sur la partie externe des ailes de la voilure 2 permet d'avoir un plus grand bras de levier pour réduire le moment de flexion, avec relativement peu d'impact sur la dynamique du vol en raison de la perte d'efficacité due aux effets de flexibilité des ailes. D'un point de vue de l'analyse dynamique modale, le procédé vise à atténuer la réponse du premier mode voilure (mode de flexion symétrique des ailes), et a relativement peu d'impact sur les modes rigides et sur le confort.

Pour la méthode d'estimation du vent, l'ordre de commande qui est calculé par la loi d'allègement de charge est qualifiée de « feedforward », prenant comme entrée une estimation de la perturbation indépendante de la réponse aéronef AC, limitant l'impact sur la stabilité de l'aéronef AC.

Pour la méthode d'estimation de l'accélération flexible, la contribution de l'accélération rigide de l'aéronef AC est estimée et soustraite à la valeur mesurée par les accéléromètres des ailes de la voilure 2, conservant uniquement la contribution flexible, dans l'objectif de limiter l'impact sur la stabilité de l'avion et sur la dynamique du vol. La loi d'allègement de charge est qualifiée de « feedback ».

Le procédé présente au moins les avantages suivants :
- Amélioration de la réduction du moment de flexion des ailes de la voilure 2 en réponse au vent, par rapport aux techniques reposant sur des braquages statiques,
- Réduction du moment de flexion négatif (en valeur absolue) en réponse au vent vertical, quand les techniques basées sur des braquages statiques tendent au contraire à l'augmenter,
- Même si l'impact est limité, le procédé peut permettre une amélioration du confort des passagers et du pilote, en atténuant la réponse dynamique de l'aéronef AC au vent vertical.

## Revendications

1. Procédé de réduction de charges générées sur un aéronef (AC) par une perturbation due au vent, l'aéronef (AC) présentant une voilure (2) comportant des gouvernes extérieures (3) susceptibles d'être actionnées par des premiers actionneurs (9),
**caractérisé en ce qu'**il comprend au moins les étapes suivantes mises en œuvre de façon automatique et répétitive :
- une première étape (E1) de définition, mise en œuvre par au moins un calculateur (31, 32), pour définir, en fonction d'un premier ensemble de conditions prédéterminées, au moins une méthode d'estimation à mettre en œuvre associée à au moins une loi d'allègement de charges à mettre en œuvre parmi :
o une méthode d'estimation du vent à partir de mesures au moins d'un capteur d'incidence (4) ou au moins d'un capteur de vitesse (5) agencé au nez de l'aéronef (AC), et/ou
o une méthode d'estimation de l'accélération flexible de l'aéronef (AC) à partir de mesures au moins d'un accéléromètre (6) embarqué sur l'aéronef (AC) en au moins un point de mesure sur la voilure (2), l'accélération flexible correspondant à une composante flexible de l'accélération de l'aéronef (AC) ;
- une étape (E2) d'acquisition, mise en œuvre par au moins une unité d'acquisition (33, 34, 35), pour acquérir :
o une incidence totale mesurée par le ou les capteurs d'incidence (4) ou une vitesse de vent totale par le ou les capteurs de vitesse (5), si la méthode d'estimation du vent est définie et/ou,
o une accélération totale mesurée par le ou les accéléromètres (6), si la méthode d'estimation de l'accélération flexible est définie ;
- une étape (E3) d'estimation, mise en œuvre par le ou les calculateurs (31, 32), pour estimer :
o la vitesse verticale du vent à partir de l'incidence totale ou à partir de la vitesse de vent totale si la méthode d'estimation du vent est définie et/ou,
o l'accélération flexible, si la méthode d'estimation de l'accélération flexible est définie ;
- une étape (E4) de détermination, mise en œuvre par le ou les calculateurs (31, 32), déterminer au moins un premier ordre de commande dynamique destiné à être envoyé aux premiers actionneurs (9), le ou les premiers ordres de commande étant destinés à engendrer un braquage des gouvernes extérieures (3) desdits premiers actionneurs (9) permettant de réduire un moment de flexion dans une bande de fréquence d'un premier mode de flexion de la voilure (2), le ou les premiers ordres de commande étant déterminés, d'une part, à partir de la ou des lois d'allègement de charges associées à la ou les méthodes d'estimation définies, et d'autre part, de la vitesse verticale de vent et/ou de l'accélération flexible ;
- une première étape (E5) de transmission, mise en œuvre par au moins une première unité de transmission (7), pour transmettre le ou les premiers ordres de commande aux premiers actionneurs (9) des gouvernes extérieures (3) ;
- une première étape (E6) de commande, mise en œuvre par les premiers actionneurs (9), pour commander les gouvernes extérieures (3) à partir du ou des premiers ordres de commande transmis dans la première étape (E5) de transmission.

2. Procédé selon la revendication 1,
**caractérisé en ce qu'**il comprend une étape (E31) d'activation, mise en œuvre par le ou les calculateurs (31, 32), pour mettre en œuvre l'étape (E4) de détermination, si un deuxième ensemble de conditions prédéterminées sont remplies, le deuxième ensemble de conditions prédéterminées comportant au moins une condition pour éviter un risque de dépassement des charges limites de l'aéronef (AC).

3. Procédé selon l'une des revendications 1 et 2,
**caractérisé en ce que**, si la méthode d'estimation du vent est définie, l'étape (E2) d'acquisition est précédée d'une étape (E11) de choix, mise en œuvre par le ou les calculateurs (31, 32), pour choisir quelle mesure entre l'incidence totale et la vitesse de vent totale est utilisée pour estimer la vitesse verticale du vent dans l'étape (E3) d'estimation, la mesure étant choisie en fonction d'un troisième ensemble de conditions prédéterminées, le troisième ensemble de conditions prédéterminées comportant au moins une condition permettant d'assurer une qualité minimale requise des mesures.

4. Procédé selon l'une des revendications 1 à 3,
**caractérisé en ce qu'**il comprend en outre :
- une étape (E7) de calcul, mise en œuvre par le ou les calculateurs (31, 32), pour calculer au moins un deuxième ordre de commande destiné à être envoyé à des deuxièmes actionneurs (10) susceptibles d'actionner des gouvernes de profondeur (11), le ou les deuxièmes ordres de commande étant configurés pour compenser un moment de tangage engendré par le braquage des gouvernes extérieures (3) de la voilure (2) actionnées par le ou les premiers ordres de commande déterminés dans l'étape (E4) de détermination,
- une deuxième étape (E8) de transmission, par une deuxième unité de transmission (12), pour transmettre aux deuxièmes actionneurs (10) le ou les deuxièmes ordres de commande,
- une deuxième étape (E9) de commande, mise en œuvre par les deuxièmes actionneurs (10), pour commander les gouvernes de profondeur (11) à partir du ou des deuxièmes ordres de commande transmis dans la deuxième étape (E8) de transmission.

5. Procédé selon l'une des revendications 1 à 4,
**caractérisé en ce que** l'étape (E3) d'estimation comprend :
au moins les sous-étapes suivantes si la méthode d'estimation du vent est définie :
- une première sous-étape (E31a) d'acquisition, mise en œuvre par une sous-unité d'acquisition (36), pour acquérir une contribution attribuable à des mouvements rigides de l'aéronef (AC) mesurée par une centrale inertielle (8), la contribution correspondant à une incidence sol au centre de gravité de l'aéronef (AC), si une incidence totale est mesurée par le ou les capteurs d'incidence (4),
- une première sous-étape (E32a) de calcul, mise en œuvre par le ou les calculateurs (31, 32), pour calculer la vitesse verticale du vent à partir de l'incidence totale et de ladite contribution ou à partir de la vitesse de vent totale ;
et/ou au moins les sous-étapes suivantes si la méthode d'estimation de l'accélération flexible de l'aéronef (AC) est définie :
- une deuxième sous-étape (E31b) d'acquisition, mise en œuvre par la sous-unité d'acquisition (36), pour acquérir une accélération rigide au centre de gravité (G) de l'aéronef (AC) mesurée par la centrale inertielle (8) et transmettre ladite accélération rigide au centre de gravité (G) de l'aéronef (AC) mesurée au ou aux calculateurs (31, 32),
- une deuxième sous-étape (E32b) de calcul, mise en œuvre par le ou les calculateurs (31, 32), pour estimer l'accélération flexible de l'aéronef (AC) à partir de l'accélération totale et de l'accélération rigide transportée au ou aux points de mesure de l'accélération totale, l'accélération rigide étant transportée au ou aux points de mesure à l'aide d'équations de corps rigide prédéterminées.

6. Procédé selon la revendication 5,
**caractérisé en ce que**, si la méthode d'estimation du vent est définie, la première sous-étape (E32a) de calcul est suivie d'une première sous-étape (E33a) de filtrage, mise en œuvre par le ou les calculateurs (31, 32), pour filtrer la vitesse verticale du vent estimée ;
si la méthode d'estimation de l'accélération flexible de l'aéronef (AC) est définie, la deuxième sous-étape (E32b) de calcul étant suivie d'une deuxième sous-étape (E33b) de filtrage, mise en œuvre par le ou les calculateurs (31, 32), pour filtrer l'accélération flexible à l'aide d'un filtre passe-haut présentant une fréquence de coupure supérieure ou égale à des modes rigides longitudinaux et inférieure ou égale au premier mode de flexion de la voilure (2).

7. Procédé selon l'une des revendications 2 à 6,
**caractérisé en ce que** le deuxième ensemble de conditions prédéterminées comprend au moins un seuil d'angle d'incidence défini à partir de la vitesse du vent et/ou un seuil d'accélération, ces seuils étant représentatifs d'un seuil de braquage prédéterminé, les conditions du deuxième ensemble de conditions prédéterminées ne sont pas remplies si le ou les ordres de commande engendrent un braquage des gouvernes extérieures (3) inférieur ou égal au seuil de braquage prédéterminé.

8. Système de réduction de charges générées sur un aéronef (AC) par une perturbation due au vent, l'aéronef (AC) présentant une voilure (2) comportant des gouvernes extérieures (3) susceptibles d'être actionnés par des premiers actionneurs (9),
**caractérisé en ce qu'**il comprend :
- au moins un calculateur (31, 32) configuré pour définir, en fonction d'un premier ensemble de conditions prédéterminées, au moins une méthode d'estimation à mettre en œuvre associée à au moins une loi d'allègement de charges à mettre en œuvre parmi :
o une méthode d'estimation du vent, et/ou
o une méthode d'estimation de l'accélération flexible de l'aéronef (AC), l'accélération flexible correspondant à une composante flexible de l'accélération de l'aéronef (AC) ;
- au moins une unité d'acquisition (33, 34, 35) configurée pour acquérir une incidence totale mesurée par au moins un capteur d'incidence (4) agencé au nez de l'aéronef (AC) ou une vitesse de vent totale mesurée par au moins un capteur de vitesse (5) agencé au nez de l'aéronef (AC) et/ou une accélération totale mesurée par au moins un accéléromètre (6) embarqué sur l'aéronef (AC) en au moins un point de mesure sur la voilure (2) ;
le ou les calculateurs (31, 32) étant en outre configurés pour :
- estimer :
o la vitesse verticale du vent à partir de l'incidence totale ou à partir de la vitesse de vent totale si la méthode d'estimation du vent est définie et/ou,
o l'accélération flexible, si la méthode d'estimation de l'accélération flexible est définie ;
- déterminer au moins un premier ordre de commande dynamique destiné à être envoyé aux premiers actionneurs (9), le ou les premiers ordres de commande étant destinés à engendrer un braquage des gouvernes extérieures (3) desdits premiers actionneurs (9) permettant de réduire un moment de flexion dans une bande de fréquence d'un premier mode de flexion de la voilure (2), le ou les premiers ordres de commande étant déterminés, d'une part, à partir de la ou des lois d'allègement de charges associées à la ou les méthodes d'estimation définies, et d'autre part, de la vitesse verticale de vent et/ou de l'accélération flexible ;
le système comprenant en outre au moins une première unité de transmission (7) configurée pour transmettre le ou les premiers ordres de commande aux premiers actionneurs (9) des gouvernes extérieures (3) pour commander les gouvernes extérieures (3).

9. Aéronef,
**caractérisé en ce qu'**il comporte un système de réduction de charges générées sur un aéronef par une perturbation due au vent selon la revendication 8.
